Europäisches Patentamt

European Patent Office

Office européen des brevets

(11) Publication number: **0 246 897 B1**

# EUROPEAN PATENT SPECIFICATION

(45) Date of publication of patent specification: **06.11.91**  (51) Int. Cl.⁵: **C11D 17/04**, D06F 39/02

(21) Application number: **87304525.6**

(22) Date of filing: **21.05.87**

(54) **Sealable containers.**

(30) Priority: **23.05.86 GB 8612706**

(43) Date of publication of application:
**25.11.87 Bulletin 87/48**

(45) Publication of the grant of the patent:
**06.11.91 Bulletin 91/45**

(84) Designated Contracting States:
**CH DE ES FR GB IT LI NL SE**

(56) References cited:
**EP-A- 0 011 500**
**EP-A- 0 011 968**
**EP-A- 0 143 476**
**FR-A- 2 396 076**

(73) Proprietor: **UNILEVER PLC**
**Unilever House Blackfriars P.O. Box 68**
**London EC4P 4BQ(GB)**
(84) Designated Contracting States:
**GB**

Proprietor: **UNILEVER NV**
**Burgemeester s'Jacobplein 1 P.O. Box 760**
**NL-3000 DK Rotterdam(NL)**
(84) Designated Contracting States:
**CH DE ES FR IT LI NL SE**

(72) Inventor: **Newbold, Geoffrey**
**53 Chorley Way Spital**
**Bebington Wirral, L63 9LS(GB)**
Inventor: **Wraige, Douglas**
**61 St. James Avenue Upton by Chester**
**Cheshire, CH2 1NN(GB)**
Inventor: **Wagner, John Duncan**
**69 St. James Avenue Upton by Chester**
**Cheshire, CH2 1NN(GB)**

(74) Representative: **Fransella, Mary Evelyn et al**
**Unilever PLC Patents Division P.O. Box 68**
**Unilever House**
**London EC4P 4BQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

The present invention relates to sealable containers especially sealable sachets and other flexible containers, more especially to sealable, detergent containing sachets.

BACKGROUND AND PRIOR ART

Detergent containing sachets sealed with a water-sensitive coating composition are known from US-A-2 760 942 (Hercules) and GB-A-1 583 082 (Unilever). GB-A-1 583 082 discloses a detergent sachet the seams of which are sealed with water soluble adhesives such as polysaccharides or polyvinyl alcohol.

Detergent containing sachets which are sealed with mechanically weak heat seals, which rupture when agitated, are described in EP 11 500B (Unilever).

GB 2 000 177B (Akzo) discloses detergent sachets sealed with material that disintegrates in the wash water at temperatures of from 40 to 60° C. The seal may consist of a mixture of polyethylene glycol which melts at 42° C, together with a thermoplastic acrylic resin.

EP 143 476A (Akzo) discloses detergent sachets of heat-sealable material sealed with an anionic and/or water binding polymer, and a cationic polymeric adhesive, for example, polyethyleneimine.

Sachets intended to give sequential release are described, for example in EP 236136A (Unilever) published on 9 September 1987. Such sachets tend, however, to be of complicated construction.

Although containers provided with heat-sealed seams are known they do not provide the opening qualities required for many applications. Containers provided with liquid-labile seams (i.e. seams which are disrupted by liquid) are also known but they have a tendency to open prematurely during storage in the humid conditions found in many kitchens and bathrooms.

DEFINITION OF THE INVENTION

The present invention provides a heat-sealable, liquid-labile closure. According to the invention there is provided a container adapted for delivering a treatment material into an environment comprising both water and mechanical agitation, the container having at least one opening seal between two walls, the opening seal being mechanically strong in the dry state but disintegrating in water at temperatures of 40° C or below under the influence of mechanical agitation, the seal being formed from a mixture of

(i) an adhesive component which is disrupted by water at temperatures of 40° C or below and

(ii) a heat-sealable component insoluble in water at temperatures of 40° C or below.

DETAILED DESCRIPTION OF THE INVENTION

The container of the invention includes as an essential feature an opening seal between two walls, the opening seal being formed from a mixture of the two components (i) and (ii) defined above. In the description that follows, the mixture of (i) and (ii) will be referred to as the sealant.

Nature of the container walls

The walls of the container are preferably of non-heat-sealable material. By non-heat-sealable material it is meant that the material does not heat-seal to itself at temperatures up to 30° C greater than the lowest temperature at which the sealant used is heat-sealable. Although it is not essential that the walls are of non-heat-sealable material, it is important that the temperature, duration and pressure of the sealing process are such that the container walls are not directly bonded to one another over large areas without the involvement of an intermediate layer of sealant. The containers are preferably heat-sealed but other methods of sealing including pressure, ultrasonics and high frequency induction may be used. The container will, in general, open more rapidly if at least one wall (or surface) is water-permeable than if all the walls are impermeable. The walls may be in any form although flexible materials such as webs or sheets of woven, knitted or non-woven fabric or paper are preferred. The wall material is preferably fibrous but may also be filamentary, slitted or foraminous. Suitable fibrous materials include cellulose, cellulose/regenerated cellulose mixtures, polyesters, and mixtures thereof.

In preferred embodiments the walls are comprised of sausage casing paper, a viscose/cellulose mix, which is preferred because of its greater wet strength than many other papers, especially at elevated temperatures.

The container walls preferably have a base weight of 5 to 100 gm$^{-2}$, more preferably 10 to 60 gm$^{-2}$ and especially 15 to 40 gm$^{-2}$.

If the container walls are very permeable then the contents may be leached out before the container seals open. This may be a disadvantage if a delayed release of the container contents is required. The problem may be overcome by using less permeable walls.

The Adhesive Component (i)

The adhesive component (i) can be any adhesive material which is labile in water at temperature of 40°C or below. The term "labile" means that the adhesive is dissolved or otherwise disrupted by water, for example, by swelling or dispersion, such that the bond formed by the sealant is significantly weaker in the wet state than in the dry state: typically a seam having the dimensions of 1.5 x 0.5 cm may have a bond strength as high as 3N or more in the dry state, but on immersion in water the bond strength could be reduced to less than 0.2N. The bond strength may be measured by means of an Alwetron (Registered Trade Mark) Tensiometer.

Preferably, the adhesive component is water-soluble at a temperature of 40°C or below.

Preferred water-soluble adhesives are polyvinyl pyrrolidone, polyvinyl alcohol or dextrin. Polyvinyl alcohol, however, reacts with borate ions in solution to form poorly soluble crosslinked polymeric systems, and is therefore not preferred for use in containers which contain borates or materials, such as sodium perborate, which decompose to liberate borate ions.

The Sealable Component (ii)

The precise nature of the sealable component is not critical, but it must be insoluble in water at temperatures of 40°C or below. In particular the sealable component may be polyvinyl acetate, a vinyl acetate-ethylene copolymer or a polyacrylic ester. The adhesive components may in general be used as supplied by the manufacturers and may contain small amounts of other materials such as impurities and plasticisers.

The Sealant Mixture

In use, the time taken before the seal ruptures may be varied by using differing proportions of the components (i) and (ii) to make up the sealant. For example, a high proportion of the heat-sealable component leads to a seal which remains intact for longer when immersed in water than a seal prepared using the same materials and a lower proportion of the heat-sealable component. If too high a proportion of the heat-sealable component is used then the seal may not rupture quickly enough in use. If too high a proportion of the water-labile component is used then the seal may be difficult to form by heat-sealing and may rupture too quickly in use.

The relative amounts of each component may be varied at will to give a seam which opens at the required time. Simple experimentation well within the capability of one skilled in the art is required to give the required opening time. Typical proportions of adhesive component to heat-sealable component are, on a dry weight basis, 50:1 to 1:50, more preferably 20:1 to 1:20 and still more preferably 5:1 to 1:5.

The heat-sealable component is preferably in the form of an emulsion containing 40-55 wt% solids, the emulsion comprising 30 to 90 wt % of the sealant composition. The water-labile component of the sealant composition is preferably in the form of a solution containing 10 to 60 wt% of solids and comprising 10 to 70 wt% of the sealant composition.

The two components are mixed together to form a sealant mixture. For ease of application this preferably has a viscosity at 25°C in the range 1000 to 6000 mPa.s. This viscosity range is preferred as many conventional coating machines are only able to handle mixtures within this viscosity range. The sealant mixture as applied preferably contains 20 to 55 wt% solids.

Preferably the sealant is in the form of a viscous emulsion which is applied to one side of the surface and dried to give a coating which is flexible enough not to crack when the surface is flexed. This is especially valuable in embodiments where the surfaces to be sealed together are themselves flexible, and, for example, allows sachets to be manufactured on high-speed sachet-making apparatus.

If the sealant mixture is applied in viscous form, then one coat is generally sufficient. However, if the mixture is less viscous then two coats of the sealing composition may be advantageously applied to each wall. The first coat sizes the surface and the second coat forms a layer on the surface. Superior heat-sealing occurs, in general, if both surfaces to be sealed are coated with the composition.

The sealant composition is preferably applied to the surface using conventional roller coating equipment to give a dry, flexible coating which can be heat-sealed at 170 to 200°C at a pressure of 3 bar and a time of 0.5 seconds on a conventional sachet forming machine. Such machines enable flexible containers of the invention to be made rapidly and easily. Preferably, the dry bond formed between the wall and the sealant composition should be strong enough to result in tearing of the non-heat-sealable material rather than rupture of the bond. Other ways of applying the sealant and sealing the substrates will, of course, readily suggest themselves to one skilled in the art.

Sachet Embodiments

According to a preferred embodiment, the container of the invention is a sachet. Sachets in accordance with the invention are preferably rectangular or square and made with four opening seals or one fold and three opening seals, although in principle one opening seal is sufficient. Sachets also including non-opening seals are within the scope of the present invention but pattern coating may then be required.

Sachets can be made by forming the material into a pouch with the coating on the inside. The contents are then introduced and the sachet sealed.

The present invention is of use both for single compartment sachets which deliver their contents very rapidly and also for multicompartment sachets which deliver the contents of the compartments sequentially by the use of a number of seals opening at different times.

Container Contents

The contents of the container may be in any physical form. Preferably the contents are in particulate form. The container may contain any substances which are compatible with the materials of which the article of the invention is constructed. Aqueous liquids should, for example, be avoided as they would weaken the seal prematurely. The invention is of especial applicability to the home laundry process, and preferred contents of the article of the invention include fully formulated detergent compositions, bleaches, bleach precursors, fabric softeners, stain removing agents and anti-bacterial agents. The article of the invention is not only of use in the washing and dishwashing fields, and other contents and possible fields of use will, of course, be readily apparent to one skilled in the art.

Although the invention has been illustrated by reference to opening in an aqueous environment, one skilled in the art will readily recognise that containers opening in other solvent systems are within the scope of the invention.

EXAMPLES

The invention will be illustrated by the following non-limiting examples. All coating levels are on a dry basis.

Example 1

Sealant

Datac (Registered Trade Mark) 533 40 wt%
(Polyvinyl acetate/water emulsion,
53% solids, viscosity 3000 mPa.s)
National (Registered Trade Mark) 018-1074E
Aqueous polyvinyl alcohol, 60 wt%
12% solids, viscosity 6000 mPa.s

Substrate

Non-heat-sealable, tea-bag paper 18 $gm^{-2}$

Two coats of sealant in amounts of 16 $gm^{-2}$ and 8 $gm^{-2}$ respectively were applied to the substrate, which was dried at 60°C between each coat. A sachet 150 mm square, containing 150 g of detergent powder was formed by heat sealing the coated paper at 180°C at 3 bar (45 psi) for 0.5 second. The sachet opened after agitation in water for one minute at 40°C.

#### Example 2

Sealant

Datac 533 90 wt%
National 018-1047E 10 wt%

Substrate

As Example 1.

A sachet was formed as described in Example 1. The sachet opened after agitation in water for ten minutes.

#### Example 3

Sealant

Vinamul (Registered Trade Mark) 3265
(Copolymer of vinyl acetate 50 wt%
with 25% ethylene, 53% solids
viscosity 3000 mPa.s at 25$^\circ$ C)
National 018-1074E 50 wt %

Substrate

As Example 1.

Two coats of sealant in amounts of 8 gm $^{-2}$ dry were applied to the substrate by a roller coating machine fitted with a heated drum and hot-air drying system. The coated paper was formed into 150 mm square sachets filled with 60 g of detergent powder using an Ilapack (Registered Trade Mark) type sachet making machine. The sachet opened within 2 to 4 minutes of coming into contact with wash water when tested in a washing machine set at 40$^\circ$ C.

#### Example 4

Sealant

As Example 1

Substrate

Sausage Casing Paper 21 gm$^{-2}$

Two coats of sealant in amounts of 10 gm$^{-2}$ respectively were applied to the substrate which was dried at 60$^\circ$ C between each coat. A sachet 150 mm square, containing 150 g of detergent powder was formed by heat-sealing the coated paper at 180$^\circ$ C at 3 bar (45 psi) for 0.5 second. The sachet opened after agitation in water for two minutes at 40$^\circ$ C.

#### Examples 5 to 9

A range of sachets differing in the relative proportions of the labile adhesive component and the heat-sealable component of the seam were made in order to study the effect on opening time.

All the sachets were made of sausage casing paper having a base weight of 21 gm$^{-2}$. The results are shown in Table 1 and it may readily be seen that the opening time is a function of the sealant composition.

#### Examples 10 to 15

A similar series of experiments to those described in Examples 5 to 9 were performed using a coffee bag paper sold under the Registered Trade Mark, Crompton 824. The results are shown in Table 2.

Table 1 : Examples 5-9

| Example | Datac 533 (wt % of emulsion) | National 018-1074E (wt % of solution) | Coating level (gm$^{-2}$) | Dry Bond Strength*(N) | Opening Time (min) |
|---|---|---|---|---|---|
| 5 | 70 | 30 | 45 | 14.2 | 5.5 |
| 6 | 50 | 50 | 37 | 12.5 | 2.5 |
| 7 | 40 | 60 | 32 | 7.7 | 1 |
| 8 | 30 | 70 | 30 | 5.8 | 1 |
| 9 | 20 | 80 | 28 | 5.2 | 0.5 |

* measured on strip 1.5 x 0.5 cm using Alwetron (Trade Mark) tensiometer

Table 2 – Examples 10-15

| Example | Datac 533 (wt % of emulsion) | National 018-1074E (wt % of solution) | Coating level (gm$^{-2}$) | Dry Bond Strength(N) | Opening Time (min) |
|---|---|---|---|---|---|
| 10 | 70 | 30 | 44 | 9 | 5 |
| 11 | 60 | 40 | 38 | 9.6 | 4 |
| 12 | 50 | 50 | 40 | 9.6 | 3 |
| 13 | 40 | 60 | 32 | 10.1 | 2 |
| 14 | 30 | 70 | 27 | 9.7 | 2 |
| 15 | 20 | 80 | 23 | 8.1 | 1 |

Example 16

A sachet product displaying sequential release was prepared as follows: A strip of polyethylene laminated cellulosic non-woven fabric of base weight 30 gm$^{-2}$ (Storalene (Registered Trade Mark)) of dimensions 10 x 20 cm was coated with a 1:1 mixture of Datac 533 and National 018-1-74E at a coating level of 16gm⁻² over an area of 10 x 10cm extending from one short edge of the fabric and dried. The remaining surface of that side was coated at the same level with a 9:1 mixture of Datac 533 and National 018-1074E and dried. Conventional detergent powder (50 g) and sodium bromide (1.6 g) was placed on the 1:1 'side' and potassium monopersulphate (8 g) on the 9:1 'side'. The fabric was folded along the major axis and heat-sealed along the edges and middle to form two, joined 10 x 10 cm sachets, one containing the detergent powder and the other the per-salt. The sachet was introduced into a conventional washing machine. At 40°C, the detergent was released into the wash liquor after 2.5 minutes and the per-salt after 11 minutes.

Example 17

A sachet identical to that prepared in Example 1 was prepared with the exception that the sachet was sealed by high frequency induction. The sachet opened after agitation in water for one minute at 40°C.

**Claims**

1. A container adapted for delivering a treatment material into an environment comprising both water and mechanical agitation, the container having at least one opening seal between two walls, the opening seal being mechanically strong in the dry state, characterised in that the seal disintegrates in water at temperatures of 40°C or below under the influence of mechanical agitation, the seal being formed from a mixture of

    (i) an adhesive component which is disrupted by water at temperatures of 40°C or below and
    (ii) a heat-sealable component insoluble in water at temperatures of 40°C or below.

2. A container as claimed in claim 1 wherein the seal is a heat seal.

3. A container as claimed in claim 1 or claim 2, having a plurality of compartments, each compartment being sealed with a mixture disintegrating at a different time.

4. A container as claimed in any one of claims 1 to 3, wherein the adhesive component (i) is soluble in water at temperatures of 40°C and below.

5. A container as claimed in any one of claims 1 to 4, in the form of a sachet.

6. A container as claimed in any one of claims 1 to 5, wherein the adhesive component (i) is polyvinyl pyrrolidone, polyvinyl alcohol or dextrin.

7. A container as claimed in any one of claims 1 to 6, wherein the heat-sealable component (ii) is a vinyl acetate homopolymer, vinyl acetate/ethylene copolymer or polyacrylic acid.

8. A container as claimed in any one of claims 1 to 7, wherein the container comprises a web or sheet of woven, knitted or non-woven fabric or paper.

9. A container as claimed in any one of claims 1 to 8, wherein the container contains a fabric treatment composition.

10. A container as claimed in any one of claims 1 to 9, wherein, the container has at least one opening seal between two non-heat-sealable walls, the opening seal being a heat seal and being formed from a mixture of

    (i) an adhesive component soluble in water at temperatures of 40°C or below and
    (ii) a heat-sealable component insoluble in water at temperatures of 40°C or below.

11. A method of heat-sealing together two surfaces of non-heat-sealable materials comprising the steps of

    a) coating at least one surface with a mixture of

i) an adhesive component soluble in water at temperature of 40° C or below, and
ii) a heat-sealable component insoluble in water at temperatures of 40° C or below, and
b) heat-sealing the surfaces together.

**Revendications**

1. Un récipient adapté pour délivrer un matériau de traitement dans un environnement comprenant à la fois de l'eau et une agitation mécanique, le récipient ayant au moins une fermeture étanche d'ouverture entre deux parois, la fermeture étanche d'ouverture étant résistante mécaniquement à l'état sec, caractérisé en ce que la fermeture étanche se désagrège dans l'eau à des températures de 40° C ou inférieures sous l'action de l'agitation mécanique, la fermeture étanche étant formée à partir d'un mélange

    (i) d'un composant adhésif qui est brisé par l'eau à des températures de 40° C ou inférieures et
    (ii) d'un composant thermo-scellable insoluble dans l'eau à des températures de 40° C ou inférieures.

2. Un récipient selon la revendication 1, dans lequel la fermeture étanche est une fermeture thermique étanche.

3. Un récipient selon la revendication 1 ou 2, ayant une pluralité de compartiments, chaque compartiment étant scellé avec un mélange se désagrégeant à des moments différents.

4. Un récipient selon l'une des revendications 1 à 3, dans lequel le composant adhésif (i) est soluble dans l'eau à des températures de 40° C et inférieures.

5. Un récipient selon l'une des revendications 1 à 4 sous forme d'un sachet.

6. Un récipient selon l'une des revendications 1 à 5, dans lequel le composant adhésif (i) est de la pyrrolidone polyvinylique, de l'alcool polyvinylique ou de la dextrine.

7. Un récipient selon l'une des revendications 1 à 6, dans lequel le composant thermo-scellable (ii) est un homopolymère d'acétate de vinyle, un copolymère d'acétate de vinyle/éthylène ou de l'acide polyacrylique.

8. Un récipient selon l'une des revendications 1 à 7, dans lequel le récipient comprend une toile ou une feuille de tissu ou de papier tissé, tricoté ou non-tissé.

9. Un récipient selon l'une des revendications 1 à 7, dans lequel le récipient contient une composition de traitement de tissus.

10. Un récipient selon l'une des revendications 1 à 9, dans lequel le récipient a au moins une fermeture étanche d'ouverture entre deux parois non thermo-scellables, la fermeture étanche d'ouverture étant une fermeture thermique étanche et étant formée à partir d'un mélange

    (i) d'un composant adhésif soluble dans l'eau à des températures de 40° C ou inférieures et
    (ii) d'un composant thermo-scellable insoluble dans l'eau à des températures de 40° C ou inférieures.

11. Un procédé de thermo-scellage de deux surfaces de matériaux non thermo-scellables comprenant les étapes consistant à

    a) revêtir au moins une surface avec un mélange
       (i) d'un composant adhésif soluble dans l'eau à des températures de 40° C ou inférieures, et
       (ii) d'un composant thermo-scellable insoluble dans l'eau à des températures de 40° C ou inférieures et
    b) thermo-sceller les surfaces ensemble.

**Patentansprüche**

1.  Behälter, der zur Abgabe eines Behandlungsmaterials in eine Umgebung, die sowohl Wasser als auch mechanische Bewegung umfaßt, geeignet ist, wobei der Behälter wenigstens eine Öffnungsabdichtung zwischen zwei Wänden aufweist, wobei die Öffnungsabdichtung in trockenem Zustand mechanisch fest ist, dadurch gekennzeichnet, daß die Abdichtung in Wasser bei Temperaturen von 40° C oder darunter unter dem Einfluß von mechanischer Bewegung zerfällt, wobei die Abdichtung aus einer Mischung gebildet wird von
    (i) einer Klebstoffkomponente, die von Wasser bei Temperaturen von 40° C oder darunter aufgebrochen wird und
    (ii) einer heißsiegelfähigen Komponente, die unlöslich ist in Wasser bei Temperaturen von 40° C oder darunter.

2.  Behälter nach Anspruch 1, worin die Abdichtung eine Heißversiegelung ist.

3.  Behälter nach Anspruch 1 oder Anspruch 2, der eine Vielzahl von Fächern aufweist, wobei jedes Fach mit einer Mischung abgedichtet ist, die zu unterschiedlichen Zeiten zerfallen.

4.  Behälter nach einem der Ansprüche 1 bis 3, worin die Klebstoffkomponente (i) in Wasser bei Temperaturen von 40° C und darunter löslich ist.

5.  Behälter nach einem der Ansprüche 1 bis 4 in Form eines Beutels.

6.  Behälter nach einem der Ansprüche 1 bis 5, worin die Klebstoffkomponente (i) Polyvinylpyrrolidon, Polyvinylalkohol oder Dextrin ist.

7.  Behälter nach einem der Ansprüche 1 bis 6, worin die heißsiegelfähige Komponente (ii) ein Vinylacetat-Homopolymer, Vinylacetat/Ethylen-Copolymer oder Polyacrylsäure ist.

8.  Behälter nach einem der Ansprüche 1 bis 7, worin der Behälter ein Gewebe oder eine dünne Lage aus gewobenem, gestricktem oder nicht-gewobenem Textil oder Papier umfaßt.

9.  Behälter nach einem der Ansprüche 1 bis 8, worin der Behälter eine Textilbehandlungs-Zusammensetzung enthält.

10. Behälter nach einem der Ansprüche 1 bis 9, worin der Behälter wenigstens eine Öffnungsabdichtung zwischen zwei nicht-heißsiegelfähigen Wänden umfaßt, wobei die Öffnungsabdichtung eine Heißversiegelung ist und aus einer Mischung gebildet wird von
    (i) einer Klebstoffkomponente, die löslich ist in Wasser bei Temperaturen von 40° C oder darunter und
    (ii) einer heißsiegelfähigen Komponente, die unlöslich ist in Wasser bei Temperaturen von 40° C oder darunter.

11. Verfahren zum Miteinander-Heißsiegeln von zwei Oberflächen aus nicht- heißsiegelfähigen Materialien, das die folgenden Schritte umfaßt:
    a) Überziehen von wenigstens einer Oberfläche mit einer Mischung von
    i) einer Klebstoffkomponente, die löslich ist in Wasser bei Temperaturen von 40° C oder darunter und
    ii) einer heißsiegelfähigen Komponente, die unlöslich ist in Wasser bei Temperaturen von 40° C oder darunter und
    b) Heißsiegeln der beiden Oberflächen miteinander.